# EUROPÄISCHE PATENTSCHRIFT

(11) **EP 2 058 535 B1**
(45) Veröffentlichungstag und Bekanntmachung des Hinweises auf die Patenterteilung: **09.02.2011**
(21) Anmeldenummer: 08167282.6
(22) Anmeldetag: 22.10.2008
(51) Int. Cl.: F16C 13/00, F16H 55/48, B29C 45/14

(54) **Wälzgelagerte Rolle**
Pulley with rolling bearing
Poulie avec roulement

(30) Priorität: 09.11.2007 DE 102007053878
(43) Veröffentlichungstag der Anmeldung: 13.05.2009
(73) Patentinhaber: Schaeffler Technologies GmbH & Co. KG, 91074 Herzogenaurach (DE)
(72) Erfinder: Dungs, Jens, 90489 Nürnberg (DE)

(56) Entgegenhaltungen:
- EP-A- 0 298 356
- EP-A- 0 887 568
- DE-U1- 9 307 931
- JP-A- 2003 343 546

## Beschreibung

### Gebiet der Erfindung

Die Erfindung betrifft eine insbesondere für eine Spannvorrichtung geeignete wälzgelagerte Rolle sowie ein Verfahren zur Herstellung einer wälzgelagerten Rolle.

### Hintergrund der Erfindung

Aus der EP-A-0 887 568 ist ein layer initaller Merkmalen des Oberbegriffs vom Anspruch 1 bekannt.

Aus der DE 93 07 931 U1 ist eine riemengetriebene Rolle bekannt, welche insbesondere für Rollengehänge von Ringspinnmaschinen vorgesehen ist. Sie besteht aus einer hohlzylindrischen Hülse, deren Außenmantelfläche zumindest abschnittsweise von einem Treib- oder Steuerriemen beaufschlagt ist, wobei in deren Bohrung konzentrisch eine Welle angeordnet ist, auf welcher die Rolle über eine Wälzlagerung geführt ist.

Ein Lager für eine Spannvorrichtung ist beispielsweise aus DE 297 11 143 U 1 bekannt. Dieses Lager weist einen Außenring auf, welcher mit einem Lageraußenteil verbunden ist. Das Lageraußenteil bildet eine Spannrolle für eine Spannvorrichtung, beispielsweise für einen Ketten- oder Riementrieb. Eine offene Stirnseite des Lagers ist durch eine Abdeckkappe abschließbar, welche mehrere am Umfang verteilte Schnappelemente aufweist. Am Lageraußenteil sind mit den Schnappelementen zusammenwirkende Gegenschnappelemente vorhanden. Das Lageraußenteil kann auch als Zahnrad ausgebildet sein.

### Aufgabe der Erfindung

Der Erfindung liegt die Aufgabe zugrunde, eine rationell herstellbare, wälzgelagerte Rolle anzugeben, welche sich insbesondere zur Führung eines Riemens eignet und durch einen geringen axialen Bauraumbedarf auszeichnet.

### Zusammenfassung der Erfindung

Diese Aufgabe wird erfindungsgemäß gelöst durch eine wälzgelagerte Rolle mit den Merkmalen des Anspruchs 1 sowie durch ein Verfahren zur Herstellung einer wälzgelagerten Rolle mit den Merkmalen des Anspruchs 17. Im Folgenden im Zusammenhang mit der Vorrichtung erläuterte Ausgestaltungen und Vorteile der Erfindung gelten sinngemäß auch für das Verfahren und umgekehrt.

Die wälzgelagerte Rolle umfasst einen in bevorzugter Anwendung nicht rotierenden Innenring, eine Anzahl Wälzkörper, insbesondere Kugeln, sowie einen Außenring, mit dem ein Lageraußenteil aus Kunststoff mittels Kunststoffspritzguss verbunden ist. An mindestens einer Stirnseite des Lageraußenteils, vorzugsweise an beiden Stirnseiten, befindet sich eine als Abdeckscheibe ausgebildete Abdeckung. Die Abdeckung ist auf eine Verdrehsicherungskontur des Lageraußenteils aufgesetzt und ragt in radialer Richtung über das Lageraußenteil hinaus. Die Abdeckscheibe ist vorzugsweise aus Metall, insbesondere aus nicht rostendem Stahl, gefertigt. Sofern zwei Abdeckscheiben mit dem Lageraußenteil verbunden sind, haben diese vorzugsweise identische Abmessungen.

Um die Abdeckscheibe gegen ein Abheben vom Lageraußenteil in axialer Richtung zu sichern, ist eine dauerhafte Verformung von Verdrehsicherungselementen des Lageraußenteils nach dem Aufsetzen der Abdeckscheibe vorgesehen.

Die Verdrehsicherungselemente, welche zugleich zur Übertragung zumindest geringer Axialkräfte vorgesehen sind, werden durch Ultraschallverschweißung verformt. Beispielsweise sind als Verdrehsicherungselemente einzelne Pins vorgesehen, welche jeweils in eine Öffnung in der Abdeckscheibe eingreifen. Die über den Umfang verteilt angeordneten Öffnungen befinden sich bevorzugt jeweils in einem vertieften Bereich der Abdeckscheibe, so dass die Abdeckscheibe mit dem Lageraußenteil verbindbar ist, ohne über die Stirnseite der wälzgelagerten Rolle hinausragende Verbindungselemente zu benötigen.

Als Werkstoff zur Herstellung des Lageraußenteils ist beispielsweise Polyamid geeignet. Besonders günstige mechanische Eigenschaften sind mit faserverstärkten Kunststoffen erzielbar, wobei der Faseranteil vorzugsweise zwischen 10% und 30%, insbesondere bei 20%, liegt. Bei den zur Verstärkung des Kunststoffs, zum Beispiel PA 66, verwendeten Fasern handelt es sich bevorzugt um Kohlenstofffasern.

In besonders vorteilhafter Ausgestaltung ist eine Überlappung zwischen der Abdeckscheibe und dem Innenring des Wälzlagers in radialer Richtung gegeben, so dass an dieser Stelle eine Abdichtung des Wälzlagers gebildet ist. Die Abdichtung ist auf beiden Stirnseiten des Wälzlagers vorzugsweise gleichartig gestaltet. Im Bereich radial innerhalb der Abdichtungen weist der Innenring vorzugsweise einen asymmetrischen Querschnitt auf, wobei er in genau einer Richtung axial über die an der betreffenden Stirnseite angeordnete Abdeckscheibe hinausragt. An der gegenüberliegenden Stirnseite weist der Innenring vorzugsweise eine konische Öffnung auf.

Das Wälzlager der Rolle ist vorzugsweise als einreihiges Lager, insbesondere als Vierpunktlager, ausgebildet. Das maximale Kippspiel des Lagers beträgt in bevorzugter Ausgestaltung nicht mehr als 0,012 mrad, insbesondere nicht mehr als 0,008 mrad. Damit wird ein Schleifen der Abdeckscheibe am Innenring selbst bei schmaler zwischen diesen Teilen gebildeter Spaltdichtung zuverlässig vermieden. Dies gilt sowohl für Ausführungsformen, in denen das Lageraußenteil eine Verzahnung aufweist, als auch in Ausführungsformen, in denen das Lageraußenteil eine glatte Umfangsfläche aufweist.

Nachfolgend werden zwei Ausführungsbeispiele der Erfindung anhand einer Zeichnung näher erläutert. Hierin zeigen:

### Kurze Beschreibung der Zeichnung

- Figur 1: ein erstes Ausführungsbeispiel einer wälzgelagerten Rolle im Querschnitt,
- Figur 2: ein Detail der Rolle nach Figur 1,
- Figur 3: die Rolle nach Figur 1 in perspektivischer Ansicht,
- Figur 4 bis 6: ein zweites Ausführungsbeispiel einer wälzgelager- ten Rolle in Ansichten analog Figur 1 bis 3.

### Ausführliche Beschreibung der Zeichnung

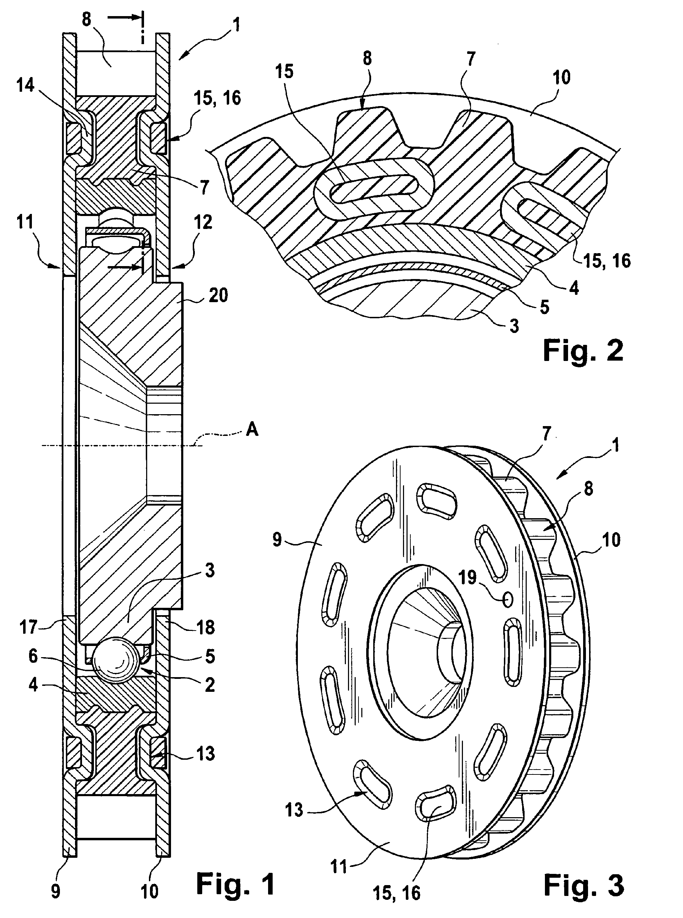

Die Figuren 1 bis 3 zeigen eine wälzgelagerte Rolle 1, welche als verzahnte Bandspann- oder Umlenkrolle ausgebildet ist. Ein Wälzlager 2 der Rolle 1 setzt sich zusammen aus einem Innenring 3, einem Außenring 4, sowie einer Anzahl in einem Käfig 5 geführter Kugeln 6 als Wälzkörper. Das einreihige Wälzlager 2 ist ein Vierpunktlager mit einem maximalen Kippspiel von ca. 0,007 mrad. An dem Außenring 4 des Wälzlagers 2 ist durch Kunststoffspritzguss ein Lageraußenteil 7 aus Kunststoff, nämlich PA 66 CF 20, angeformt, welches im vorliegenden Fall eine Verzahnung 8 zur Zusammenwirkung mit einem nicht dargestellten Zahnriemen aufweist. Der Zahnriemen ist in axialer Richtung gesichert durch zwei Abdeckscheiben 9, 10, welche jeweils an einer Stirnseite 11, 12 des Lageraußenteils befestigt sind und in radialer Richtung über das Lageraußenteil 7 hinausragen. Die Begriffe "axial" und "radial" beziehen sich auf die mit A bezeichnete Rotationsachse der Rolle 1.

Die als spanlos umgeformte Teile aus Blech gefertigten Abdeckscheiben 9, 10 weisen mehrere gleichmäßig am Umfang verteile ovale Öffnungen 13 auf, die sich jeweils in einem vertieften Bereich 14 befinden. Durch jede Öffnung 13 ragt ein einstückig am Lageraußenteil 7 angeformter Pin 15 als Verdrehsicherungselement, wobei die Gesamtheit der Pins 15 eine Verdrehsicherungskontur 16 bildet. Nachdem bei der Montage der wälzgelagerten Rolle 1 die Abdeckscheiben 9, 10 auf das Lageraußenteil 7 aufgesteckt sind, werden die Pins 15 durch Ultraschallschweißen verformt, so dass sich eine formschlüssige Verbindung zwischen den Abdeckscheiben 9, 10 und dem Lageraußenteil 7 ergibt. Wie insbesondere aus Fig. 2 hervorgeht, hat jeder Pin 15 einen langgestreckten, der Kontur der Öffnung 13 angepassten Querschnitt, womit beim Verschweißen ein im Vergleich zu einem Befestigungspin mit kreisförmigem Querschnitt relativ langer kraftübertragender Randbereich, in welchem der Pin 15 die Abdeckscheibe 9, 10 hintergreift, geschaffen wird.

Zwischen jeder Abdeckscheibe 9, 10 und dem Außenring 4 ist ein Überlapp 17, 18 gebildet, welcher eine Dichtfunktion erfüllt. Die Abdeckscheiben 9, 10 haben somit eine Doppelfunktion, nämlich einerseits die Führung des Zahnriemens und andererseits die Abdichtung des Wälzlagers 2. In Figur 3 ist eine kreisförmige Öffnung 19 in der Abdeckscheibe 9 sichtbar, welche geeignet ist, die Winkelposition des Außenrings 4 sichtbar zu machen. Die in Figur 3 erkennbare erste Stirnseite 11 der Rolle 1 wird auch als vordere Stirnseite bezeichnet. Auf dieser Stirnseite 11 ragt der Innenring 3 nicht in axialer Richtung über die Abdeckscheibe 9 hinaus. Im Gegensatz hierzu weist der Innenring 3 auf der gegenüberliegenden Stirnseite 12 einen ringförmigen Ansatz 20 auf, der in axialer Richtung über die Abdeckscheibe 10 hinausragt.

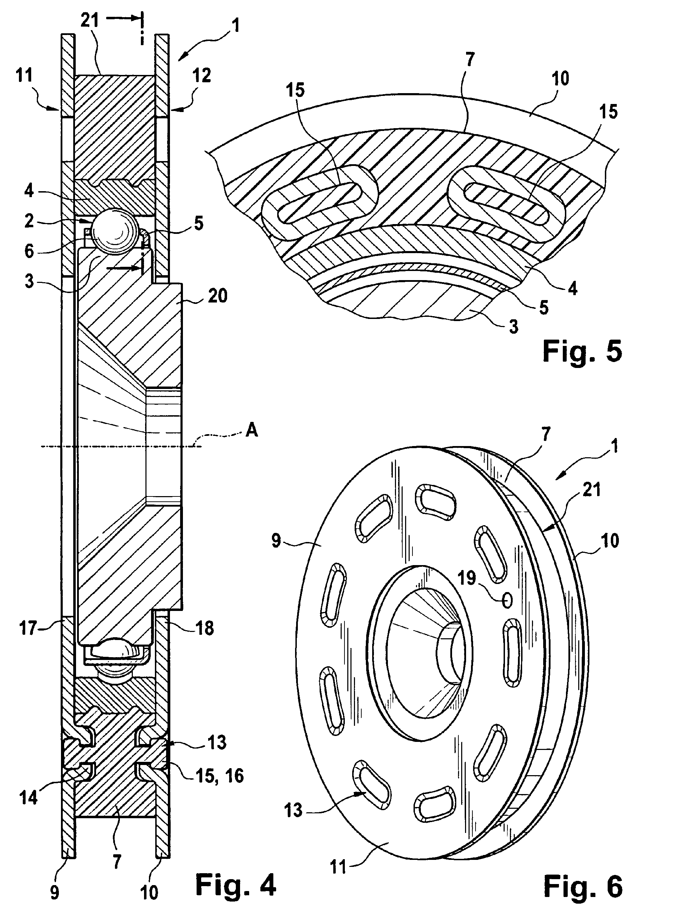

Das Ausführungsbeispiel nach den Figuren 4 bis 6 unterscheidet sich vom vorstehend erläuterten Ausführungsbeispiel dadurch, dass das Lageraußenteil 7 statt einer Verzahnung eine glatte Umfangsfläche 21 aufweist. Die Rolle 1 nach den Figuren 4 bis 6 ist damit zur Führung eines glatten Riemens geeignet. Im Übrigen trifft die Beschreibung zu den Figuren 1 bis 3 auch auf das Ausführungsbeispiel nach den Figuren 4 bis 6 zu.

### Bezugszeichen

- 1: Rolle
- 2: Wälzlager
- 3: Innenring
- 4: Außenring
- 5: Käfig
- 6: Wälzkörper
- 7: Lageraußenteil
- 8: Verzahnung
- 9: Abdeckscheibe
- 10: Abdeckscheibe
- 11: Stirnseite
- 12: Stirnseite
- 13: Öffnung
- 14: Bereich
- 15: Pin, Verdrehsicherungselement
- 16: Verdrehsicherungskontur
- 17: Überlapp
- 18: Überlapp
- 19: Öffnung
- 20: Ansatz
- 21: Umfangsfläche

- A: Rotationsachse

## Patentansprüche

1. Wälzgelagerte Rolle (1), mit einem einen Innenring (3), einen Außenring (4) und eine Anzahl Wälzkörper (6) aufweisenden Wälzlager (2), wobei der Außenring (4) mit einem Lageraußenteil (7) aus Kunststoff umspritzt ist, sowie mit mindestens einer mit dem Lageraußenteil (7) verbundenen Abdeckung (9, 10), welche als Abdeckscheibe (9, 10) ausgebildet und auf eine Verdrehsicherungskontur (16) des Lageraußenteils (7) aufgesetzt ist, **dadurch gekennzeichnet, dass** die Abdeckscheibe (9, 10) in radialer Richtung über das Lageraußenteil (7) hinausragt und dieses durch Ultraschallverschweißung verformt und mit der Abdeckscheibe (9, 10) verbunden ist.

2. Rolle (1) nach Anspruch 1, **dadurch gekennzeichnet, dass** die Abdeckscheibe (9, 10) aus Metall gefertigt ist.

3. Rolle (1) nach Anspruch 1 oder 2, **dadurch gekennzeichnet, dass** an beiden Stirnseiten (11, 12) des Lageraußenteils (7) jeweils eine Abdeckscheibe (9, 10) angeordnet ist.

4. Rolle (1) nach einem der Ansprüche 1 bis 3, **dadurch gekennzeichnet, dass** die Verdrehsicherungskontur (16) in Form einzelner Pins (15) ausgebildet ist.

5. Rolle (1) nach Anspruch 4, **dadurch gekennzeichnet, dass** jeder Pin (15) in eine Öffnung (13) in der Abdeckscheibe (9, 10) eingreift.

6. Rolle (1) nach Anspruch 5, **dadurch gekennzeichnet, dass** sich die Öffnung (13, 19) in einem vertieften Bereich (14) der Abdeckscheibe (9, 10) befindet.

7. Rolle (1) nach einem der Ansprüche 1 bis 6, **dadurch gekennzeichnet, dass** sich die Abdeckscheibe (9, 10) in radialer Richtung mit dem Innenring (3) überlappt.

8. Rolle (1) nach einem der Ansprüche 1 bis 7, **dadurch gekennzeichnet, dass** der Innenring (3) asymmetrisch ausgebildet ist, wobei er in einer Richtung axial über die Abdeckscheibe (10) hinausragt.

9. Rolle (1) nach einem der Ansprüche 1 bis 8, **dadurch gekennzeichnet, dass** das Wälzlager (2) als einreihiges Lager ausgebildet ist.

10. Rolle (1) nach einem der Ansprüche 1 bis 9 , **dadurch gekennzeichnet, dass** als Wälzkörper Kugeln (6) vorgesehen sind.

11. Rolle (1) nach Anspruch 10, **dadurch gekennzeichnet, dass** das Wälzlager (2) als Vierpunktlager ausgebildet ist.

12. Rolle (1) nach Anspruch 11, **dadurch gekennzeichnet, dass** das Wälzlager (2) ein maximales Kippspiel von 0,012 mrad aufweist.

13. Rolle (1) nach einem der Ansprüche 1 bis 12, **dadurch gekennzeichnet, dass** das Lageraußenteil (7) eine Verzahnung (8) aufweist.

14. Rolle (1) nach einem der Ansprüche 1 bis 12, **dadurch gekennzeichnet, dass** das Lageraußenteil (7) eine glatte Umfangsfläche (21) aufweist.

15. Rolle (1) nach einem der Ansprüche 1 bis 14, **dadurch gekennzeichnet, dass** das Lageraußenteil (7) Polyamid umfasst.

16. Rolle (1) nach einem der Ansprüche 1 bis 15, **dadurch gekennzeichnet, dass** das Lageraußenteil (7) aus faserverstärktem Kunststoff gefertigt ist.

17. Verfahren zur Herstellung einer wälzgelagerten Rolle (1), mit folgenden Schritten:
• Bereitstellen eines Wälzlagers (2), welches einen Innenring (3), eine Anzahl Wälzkörper (6), sowie einen Außenring (4) und ein im Kunststoffspritzgussverfahren mit diesem verbundenes Lageraußenteil (7) umfasst,
• Aufsetzen von zwei Abdeckscheiben (9, 10) auf die Stirnseiten (11, 12) des Lageraußenteils (7), wobei die Abdeckscheiben (9, 10) das Lageraußenteil (7) in radialer Richtung überragen und einstückig mit dem Lageraußenteil (7) verbundene Verdrehsicherungselemente (15) in Öffnungen (13) der Abdeckscheiben (9, 10) eingreifen,
• Befestigen der Verdrehsicherungselemente (15) an der Abdeckscheibe (9, 10) durch Ultraschallschweißen.

## Claims

1. Rolling-bearing-mounted roller (1) comprising a rolling bearing (2) which has an inner ring (3), an outer ring (4) and a number of rolling bodies (6), wherein the outer ring (4) is encapsulated with a plastic bearing outer part (7) by injection moulding, and comprising at least one cover (9, 10) which is connected to the bearing outer part (7), is embodied as a cover disc (9, 10) and is fitted on an anti-rotation contour (16) of the bearing outer part (7), **characterized in that** the cover disc (9, 10) protrudes beyond the bearing outer part (7) in the radial direction and this bearing outer part (7) is deformed and connected to the cover disc (9, 10) by means of ultrasonic welding.

2. Roller (1) according to Claim 1, **characterized in that** the cover disc (9, 10) is produced from metal.

3. Roller (1) according to Claim 1 or 2, **characterized in that** a cover disc (9, 10) is arranged on each of the two end faces (11, 12) of the bearing outer part (7).

4. Roller (1) according to one of Claims 1 to 3, **characterized in that** the anti-rotation contour (16) is embodied in the form of individual pins (15).

5. Roller (1) according to Claim 4, **characterized in that** each pin (15) engages in an opening (13) in the cover disc (9, 10).

6. Roller (1) according to Claim 5, **characterized in that** the opening (13, 19) is situated in a recessed area (14) of the cover disc (9, 10).

7. Roller (1) according to one of Claims 1 to 6, **characterized in that** the cover disc (9, 10) overlaps with the inner ring (3) in the radial direction.

8. Roller (1) according to one of Claims 1 to 7, **characterized in that** the inner ring (3) is embodied asymmetrically, wherein it protrudes axially beyond the cover disc (10) in one direction.

9. Roller (1) according to one of Claims 1 to 8, **characterized in that** the rolling bearing (2) is embodied as a single-row bearing.

10. Roller (1) according to one of Claims 1 to 9, **characterized in that** balls (6) are provided as rolling bodies.

11. Roller (1) according to Claim 10, **characterized in that** the rolling bearing (2) is embodied as a four-point bearing.

12. Roller (1) according to Claim 11, **characterized in that** the rolling bearing (2) has a maximum tilting play of 0.012 mrad.

13. Roller (1) according to one of Claims 1 to 12, **characterized in that** the bearing outer part (7) has toothing (8).

14. Roller (1) according to one of Claims 1 to 12, **characterized in that** the bearing outer part (7) has a smooth circumferential surface (21).

15. Roller (1) according to one of Claims 1 to 14, **characterized in that** the bearing outer part (7) comprises polyamide.

16. Roller (1) according to one of Claims 1 to 15, **characterized in that** the bearing outer part (7) is produced from fibre-reinforced plastic.

17. Process for producing a rolling-bearing-mounted roller (1), comprising the following steps:
• providing a rolling bearing (2) which comprises an inner ring (3), a number of rolling bodies (6), and also an outer ring (4) and a bearing outer part (7) connected thereto by means of a plastic injection moulding process,
• placing two cover discs (9, 10) on the end faces (11, 12) of the bearing outer part (7), wherein the cover discs (9, 10) protrude beyond the bearing outer part (7) in the radial direction and anti-rotation elements (15) integrally connected to the bearing outer part (7) engage in openings (13) in the cover discs (9, 10),
fastening the anti-rotation elements (15) on the cover disc (9, 10) by means of ultrasonic welding.

## Revendications

1. Poulie avec palier à roulement (1), comprenant un palier à roulement (2) présentant une bague interne (3), une bague externe (4) et une pluralité de corps de roulement (6), la bague externe (4) étant surmoulée avec une partie externe de palier (7) en plastique, et comprenant aussi au moins un recouvrement (9, 10) connecté à la partie externe de palier (7), qui est réalisé sous forme de disque de recouvrement (9, 10) et qui est posé sur un contour antirotation (16) de la partie externe de palier (7), **caractérisée en ce que** le disque de recouvrement (9, 10) fait saillie dans la direction radiale au-delà de la partie externe de palier (7) et celle-ci est mise en forme par soudage aux ultrasons et est connectée au disque de recouvrement (9, 10).

2. Poulie (1) selon la revendication 1, **caractérisée en ce que** le disque de recouvrement (9, 10) est fabriqué en métal.

3. Poulie (1) selon la revendication 1 ou 2, **caractérisée en ce qu'**un disque de recouvrement (9, 10) est à chaque fois disposé sur les deux côtés frontaux (11, 12) de la partie externe de palier (7).

4. Poulie (1) selon l'une quelconque des revendications 1 à 3, **caractérisée en ce que** le contour antirotation (16) est réalisé sous forme de goupilles individuelles (15).

5. Poulie (1) selon la revendication 4, **caractérisée en ce que** chaque goupille (15) vient en prise dans une ouverture (13) dans le disque de recouvrement (9, 10).

6. Poulie (1) selon la revendication 5, **caractérisée en ce que** l'ouverture (13, 19) se trouve dans une région renfoncée (14) du disque de recouvrement (9, 10).

7. Poulie (1) selon l'une quelconque des revendications 1 à 6, **caractérisée en ce que** le disque de recouvrement (9, 10) chevauche la bague interne (3) dans la direction radiale.

8. Poulie (1) selon l'une quelconque des revendications 1 à 7, **caractérisée en ce que** la bague interne (3) est réalisée sous forme asymétrique, et fait saillie dans une direction axiale au-delà du disque de recouvrement (10).

9. Poulie (1) selon l'une quelconque des revendications 1 à 8, **caractérisée en ce que** le palier à roulement (2) est réalisé sous forme de palier à une rangée.

10. Poulie (1) selon l'une quelconque des revendications 1 à 9, **caractérisée en ce que** des billes (6) sont prévues en tant que corps de roulement.

11. Poulie (1) selon la revendication 10, **caractérisée en ce que** le palier à roulement (2) est réalisé sous forme de palier à quatre points.

12. Poulie (1) selon la revendication 11, **caractérisée en ce que** le palier à roulement (2) présente un jeu de basculement maximal de 0,012 mrad.

13. Poulie (1) selon l'une quelconque des revendications 1 à 12, **caractérisée en ce que** la partie externe de palier (7) présente une denture (8).

14. Poulie (1) selon l'une quelconque des revendications 1 à 12, **caractérisée en ce que** la partie externe de palier (7) présente une surface périphérique lisse (21).

15. Poulie (1) selon l'une quelconque des revendications 1 à 14, **caractérisée en ce que** la partie externe de palier (7) comprend du polyamide.

16. Poulie (1) selon l'une quelconque des revendications 1 à 15, **caractérisée en ce que** la partie externe de palier (7) est fabriquée en plastique renforcé par des fibres.

17. Procédé de fabrication d'une poulie avec palier à roulement (1), comprenant les étapes consistant à:
- fournir un palier à roulement (2), qui comprend une bague interne (3), une pluralité de corps de roulement (6), ainsi qu'une bague externe (4) et une partie externe de palier (7) connectée à celle-ci par un procédé de moulage par injection de plastique,
- poser deux disques de recouvrement (9, 10) sur les côtés frontaux (11, 12) de la partie externe de palier (7), les disques de recouvrement (9, 10) dépassant dans la direction radiale de la partie externe de palier (7) et venant en prise d'une seule pièce avec des éléments antirotation (15) connectés à la partie externe de palier (7) dans des ouvertures (13) des disques de recouvrement (9, 10),
- fixer les éléments antirotation (15) au disque de recouvrement (9, 10) par soudage aux ultrasons.
